# EUROPÄISCHE PATENTSCHRIFT

(11) **EP 0 796 645 B1**
(45) Veröffentlichungstag und Bekanntmachung des Hinweises auf die Patenterteilung: **03.11.2004**
(21) Anmeldenummer: 97890048.8
(22) Anmeldetag: 17.03.1997
(51) Int. Cl.: B01D 46/04, B01D 29/66, B01D 46/44

(54) **Verfahren zur Steuerung der Abreinigung von Filtern für die Feststoffabscheidung sowie Einrichtung zur Durchführung des Verfahrens**
Method for controlling the cleaning of filters for separation of particles and device for carrying out this method
Procédé pour commander le nettoyage de filtres lors de la séparation de particules ainsi que dispositif pour la réalisation du procédé

(30) Priorität: 20.03.1996 AT 51496; 31.07.1996 AT 136996
(43) Veröffentlichungstag der Anmeldung: 24.09.1997
(73) Patentinhaber: Scheuch GmbH, 4971 Aurolzmünster (AT)
(72) Erfinder: Scheuch, Alois, 4910 Ried im Innkreis (AT); Schmid, Christian, Dipl.-Ing., 4973 St. Martin (AT)
(74) Vertreter: Köhler-Pavlik, Johann, Dipl.-Ing.

(56) Entgegenhaltungen:
- EP-A- 0 525 417
- DE-A- 2 906 353
- DE-A- 3 025 548
- DE-C- 4 331 447

## Beschreibung

Die Erfindung betrifft ein Verfahren zur Steuerung der Abreinigung von Filtern für die Feststoffabscheidung mit in bestimmten Zeitintervallen Δt_{A} wiederkehrenden Druckluftimpulsen bestimmten Drucks p_{R} und bestimmter Dauer t_{V} in Abhängigkeit des gemessenen Filterwiderstands p sowie eine Einrichtung zur Ausführung dieses Verfahrens.

In vielen Bereichen der Industrie treten staubhaltige Abgase bzw. Abluft auf. Die Verunreinigungen können mit Filtern abgeschieden werden, bevor die gereinigte Luft in die Atmosphäre entweicht. Vorzugsweise werden Filter in Schlauchform aus verschiedenen porösen Materialien (Gewebefilter, Patronenfilter, Sinterlamellenfilter, etc.) verwendet, bei denen die zu reinigende Luft von außen an die schlauchförmigen Filterelemente gelangt und die gereinigte Luft aus dem Inneren der Schläuche abgezogen wird. An den Außenwänden der Filterelemente lagern sich die abzuscheidenden Stäube ab. Für eine optimalen Funktion müssen solche Filter regelmäßig gereinigt werden. Dies geschieht üblicherweise mit Hilfe von Druckluft, die in das Innere der schlauchförmigen Filterelemente eingeblasen wird und somit die an der Außenseite anhaftenden Partikel entfernt. Ein Steuergerät liefert elektrische Impulse mit denen die Druckluft über Magnetventile in die Filterelemente freigegeben wird. Der Grad der Verschmutzung solcher Filter kann durch den sogenannten Filterwiderstand definiert werden, der durch Messung des Differenzdrucks zwischen Roh- und Reingasseite (Ein- und Austrittsseite des Gases) des Filters bestimmt werden kann. Die dem Filterwiderstand proportionalen Differenzdruckwerte werden mit Hilfe eines Differenzdruckmeßumformers in entsprechende elektrische Signale umgewandelt.

Es sind Verfahren zur Abreinigung von Filtern bekannt, bei welchen die Filterelemente mit in konstanten Zeitabständen wiederkehrenden-Druckluftimpulsen gereinigt werden. Die Abreinigung erfolgt dabei unabhängig von der tatsächlichen Verschmutzung des Filters, also ohne Berücksichtigung des Filterwiderstands. Dadurch kann bei sehr starker Verschmutzung des Filters eine unzureichende Reinigung oder bei geringer Verschmutzung eine zu häufige Reinigung resultieren, weshalb für die Druckluft notwendige Energie verbraucht wird und die Filterelemente durch die Abreinigungsimpulse überbeansprucht werden und dadurch deren Alterungsprozeß beschleunigt und somit die Standzeit der Filter verkürzt wird.

Zur Verbesserung wurden Verfahren entwickelt, bei denen der Grad der Verunreinigung der Filterelemente berücksichtigt wurde. Bei anfänglichen Methoden wurde lediglich ein dem Filterwiderstand proportionaler Wert zur Anzeige gebracht und aufgrund dieses Werts eine Anpassung der Zeitintervalle zwischen den Druckluftimpulsen an den aktuellen Verschmutzungsgrad des Filters manuell durchgeführt. Dies erfordert eine regelmäßige Kontrolle des Filterwiderstands und die jeweilige manuelle Anpassung der zeitintervalle. Bei Weiterentwicklungen wurde die Impulsrate zur Steuerung der Druckluft für die Abreinigung der Filter in Abhängigkeit eines willkürlich gewählten Schwellwerts des Filterwiderstands automatisch umgeschaltet. Bei Überschreiten des Schwellwerts werden die Druckluftimpulse in kürzeren Zeitabständen und bei Unterschreiten des Schwellwerts in längeren Zeitabständen abgegeben. Die zeitintervalle für Filterwiderstände unterhalb des Schwellwerts werden dabei so eingestellt, daß eine gewisse Mindestabreinigung des Filters auch bei geringer Belastung sichergestellt ist. Diese Zwangsabreinigung kann auch abgeschaltet werden. Auch diese verbesserten Abreinigungsverfahren ermöglichen nur eine sehr begrenzte Anpassung der Reinigung an die tatsächliche Verschmutzung des Filters.

Die DE 43 31 447 C1 beschreibt ein Filter, bei dem der Zyklus der Abreinigung unter Berücksichtigung des Filterwiderstands durchgeführt wird.

Die EP 525 417 A1 zeigt eine Vorrichtung zum Filtern, bei der.mit Hilfe von Drucksensoren der Druckabfall über die Filterelemente erfasst wird und die Abreinigung der Filterelemente in Abhängigkeit der erfassten Druckabfallwerte gesteuert wird.

Aufgabe der Erfindung ist die Entwicklung eines Verfahrens, durch welches die zur Bereitstellung der Druckluft notwendige Energie möglichst niedrig gehalten wird, die Filter bei der Abreinigung möglichst wenig beansprucht werden und gleichzeitig eine ausreichende Reinigung der Filter gewährleistet wird und die oben erwähnten Nachteile vermieden werden. Der Gegenstand der vorliegenden Erfindung bezieht sich auf alle Filter, die mit Druckluft abgereinigt werden können und ist nicht auf die angeführten Beispiele beschränkt.

Die erfindungsgemäße Aufgabe wird durch dadurch gelöst, daß die Zeitintervalle Δt_{A} zwischen den Druckluftimpulsen in Abhängigkeit der zeitlichen Änderung des aktuellen Filterwiderstands (Δp/Δt) automatisch eingestellt werden. Bei dieser sogenannten dynamisehnen Zeitsteuerung, bei der die Zeitintervalle Δt_{A} zwischen den Druckluftimpulsen eingestellt werden, kann der Zusammenhang zwisehen Filterwiderstand p bzw. Differenzdrucksignal und den Zeitintervallen Δt_{A} zwischen den Abreinigungsimpulsen linear oder nicht linear sein und in mehreren Stufen oder kontinuierlich ausgewertet werden. Erfindungsgemäß werden die Druckluftimpulse an den Abreinigungseffekt, der durch die zeitliche Änderung des Filterwiderstands bzw. des Verschmutzungsgrades des Filters charakterisiert wird, angepaßt, wodurch eine Verbesserung des Verfahrens erreicht werden kann.

Durch die Maßnahmen des Patentanspruchs 2 werden bei geringem Filterwiderstand p bzw. geringer Verschmutzung die Zeitintervalle Δt_{A} zwischen den Abreinigungsimpulsen größer und damit weniger Energie für die Druckluft aufgewendet und die Filterelemente weniger beansprucht während bei größerem Filterwiderstand bzw. größerer Verschmutzung öfter gereinigt wird. Die Schwelle (Filterwiderstand pₛ) wird entsprechend der größten zu erwartenden Verschmutzung gewählt. Steigt der Filterwiderstand doch über den Schwellwert pₛ, wird mit den kürzest möglichen Zeitintervallen Δt_{Amin} abgereinigt.

Durch die im kennzeichnenden Teil des Anspruchs 3 angegebenen Verfahrensmerkmale wird eine Nachreinigung des Filters bei großer Verunreinigung bzw. großem Filterwiderstand p und damit eine sichere Abreinigung desselben erreicht.

Die Verfahrensvariante gemäß Patentanspruch 4 stellt eine vorteilhafte, einfach realisierbare und zweckmäßige Lösung der eingangs gestellten Aufgabe dar.

Die erfindungsgemäße Aufgabe kann auch durch die Maßnahmen des Patentanspruchs 5 gelöst werden, wobei anstelle der Zeitintervalle Δt_{A} zwischen den Druckluftimpulsen die Dauer t_{V} der Druckluftimpulse in Abhängigkeit der zeitlichen Änderung des aktuellen Filterwiderstands (Δp/Δt) automatisch eingestellt wird. Es können die oben beschriebenen Verfahrensvarianten ebenso auf diesen Parameter umgelegt werden, wodurch die selben Vorteile, wie bei der Einstellung der Zeitintervalle zwischen den Druckluftimpulsen erzielt werden. Die Dauer der Druckluftimpulse wird im Allgemeinen durch die Öffnungszeit eines mit der Druckluftquelle verbundenen Magnetventils bestimmt.

Die Vorteile der Verfahrensvarianten zur Steuerung der Filterabreinigung durch Einstellung der Dauer t_{V} der Druckluftintervalle nach den Patentansprüchen 6 bis 8 entsprechen jenen der Ansprüche 2 bis 4.

Die erfindungsgemäße Aufgabe wird aber auch durch die Maßnahmen des Patentanspruchs 9 gelöst, wonach der Druck p_{R} der Druckluftimpulse in Abhängigkeit des aktuellen Filterwiderstands p automatisch eingestellt wird.

Die Vorteile der Verfahrensvarianten zur Steuerung der Filterabreinigung durch Einstellung des Drucks p_{R} der Druckluftimpulse entsprechend der Patentansprüche 10 bis 12 entsprechen jenen der Ansprüche 2 bis 4 bzw. 6 bis 8.

Weitere Vorteile werden erzielt, wenn eines der oben erwähnten Verfahren bzw. eine beliebige Kombination davon mit einer automaischen Einstellung der Zeitintervalle zwischen den Druckluftimpulsen in Abhängigkeit vom aktuellen Filterwiderstand kombiniert werden. Dadurch kann eine weitere Steigerung der Energieoptimierung und der Filterschonung erreicht werden.

Die Auswahl, welcher oder welche Abreinigungsparameter geregelt werden, kann auch von den Gegebenheiten des Betriebes abhängen. So kann nur eine Druckluftquelle mit begrenztem Druck zur Verfügung stehen und eine Druckerhöhung nicht einfach durchführbar sein, weshalb eine Optimierung der Filterabreinigung nur durch Änderung der zeitlichen Parameter (Zeitintervalle Δt_{A} zwischen den Druckluftimpulsen und Dauer t_{V} der Druckluftimpulse) erfolgen.

Durch die Maßnahmen der Patentansprüche 14 und 15 kann die Abreinigung automatisch auf einen optimalen Betriebszustand eingestellt und die Energieerfordernisse entsprechend dem Verschmützungsgrad des Filters optimiert werden.

Eine weitere Aufgabe der Erfindung besteht in der Schaffung einer Einrichtung zur Ausführung der oben beschriebenen erfindungsgemäßen Verfahrensvarianten zur Steuerung der Abreinigung von Filtern für die Feststoffabscheidung.

Gelöst wird diese Aufgabe durch die im kennzeichnenden Teil des Anspruchs 16 angegebenen Merkmale. Mit einer derartig aufgebauten Einrichtung kann das erfindungsgemäße Verfahren einfach und flexibel realisiert werden. Dabei kann der Zusammenhang zwischen den einzustellenden Abreinigungsparametern (Abstand zwischen den Druckluftimpulsen, Dauer und Druck der Druckluftimpulse) und dem Verschmutzungsgrad des Filters (Filterwiderstand) in Form einer Tabelle oder einer Funktion vorliegen, wobei der Zusammenhang linear oder nichtlinear sein kann. Dieser Zusammenhang und das entsprechende Ablaufprogramm des Mikrokontrollers kann in besonders einfacher Weise durch Austausch des Programmspeicherbausteins oder durch Neuprogrammierung des Mikrokontrollers geändert und an die jeweiligen Erfordernisse angepaßt werden.

Gemäß den Merkmalen des Anspruchs 17 ist vorgesehen, daß periphere Einrichtungen, wie zum Beispiel Schalter od. dgl. mit den Eingängen des Mikroprozessors verbunden sind, über die Programmparametern des Mikrokontrollers festgelegt oder geändert werden können. Der Mikrokontroller kann zum Beispiel verschiedene Zusammenhänge zwischen Filterwiderstand und Abreinigungsparametern enthalten, welche über die peripheren Einrichtungen in einfacher Weise von außen und unter bestimmten Voraussetzungen ausgewählt werden können.

Anhand der beigefügten Abbildungen werden Beispiele der erfindungsgemäßen Verfahren und vorteilhafte Ausführungsformen von Einrichtungen zur Ausführung dieses Verfahrens näher erläutert.

Darin zeigen:
Fig. 1a die Zeitdiagramme des Filterwiderstand p und des Abreinigungsdrucks p_{R} bei kontinuierlicher Abreinigung nach dem Stand der Technik,
Fig. 1b die Zeitdiagramme des Filterwiderstand p und des Abreinigungsdrucks p_{R} bei differenzdruckabhängiger Abreinigung nach dem Stand der Technik,
Fig. 1c bis 1e die Zeitdiagramme des Filterwiderstand p und des Abreinigungsdrueks p_{R} bei verschiedenen Varianten des erfindungsgemäßen Verfahrens mit Einstellung der Zeitintervalle Δt_{A} zwischen den Druckluftimpulsen,
Fig. 2 die Zeitdiagramme des Filterwiderstands p, der zeitlichen Änderung des Filterwiderstands (Δp/Δt), des Speicherdrucks p_{Q} sowie des Abreinigungsdrucks p_{R} bei einer Verfahrensvariante mit Einstellung der Dauer t_{V} der Druckluftimpulse in Abhängigkeit der Änderung des Filterwiderstands,
Fig. 3 die zeitlichen Verläufe der selben Größen wie in Fig. 2 bei einer Verfahrensvariante mit Einstellung des Drucks p_{R} der Druckluftimpulse in Abhängigkeit der Änderung des Filterwiderstands,
Fig. 4 die zeitlichen Verläufe der selben Größen wie in Fig. 2 bei einer Verfahrensvariante mit Einstellung des Drucks p_{R} der Druckluftimpulse in Abhängigkeit der Änderung des Filterwiderstands in Kombination mit der Einstellung der Zeitintervalle Δt_{A} zwischen den Druckluftimpulsen in Abhängigkeit des Filterwiderstands,
Fig. 5a das Blockschaltbild einer Ausführungsform einer Einrichtung zur Ausführung des erfindungsgemäßen Verfahrens und
Fig. 5b das Blockschaltbild einer gegenüber Fig. 5a vereinfachten Ausfuhmngsform einer Einrichtung zur Ausführung des erfindungsgemäßen Verfahrens zur Steuerung lediglich der Zeitparameter der Druckluftimpulse.

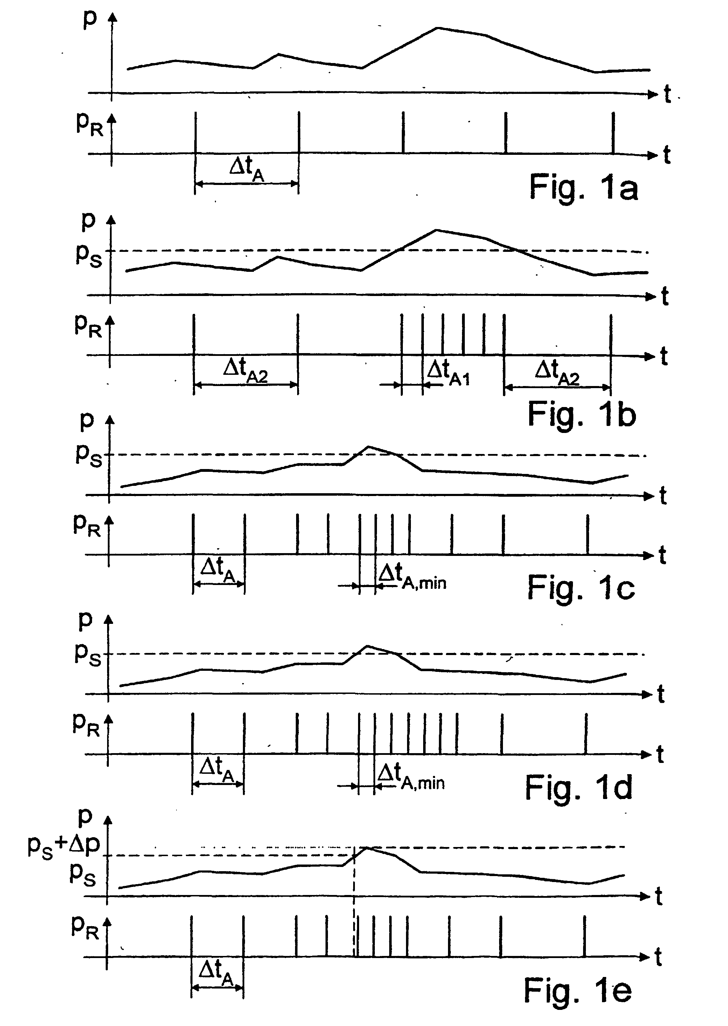

In Fig. 1a sind die Zeitdiagramme des Filterwiderstand p und des Abreinigungsdrucks p_{R} bei kontinuierlicher Abreinigung nach dem Stand der Technik dargestellt. Unabhängig vom zeitlichen Verlauf des Filterwiderstandes p oder der Verunreinigung des Filters wird in konstanten Abständen ein Spannungsimpuls an die Magnetventile zur Abreinigung der Filterelemente mit Druckluft abgegeben.

Fig. 1b zeigt die Zeitdiagramme des Filterwiderstand p und des Abreinigungsdrucks p_{R} bei differenzdruckabhängiger Abreinigung nach dem Stand der Technik. Steigt der Filterwiderstand p über einen willkürlich eingestellten Schwellwert pₛ, so werden die Druckluftimpulse in kürzeren Zeitabständen Δt_{A1} abgegeben, d.h. das Filter wird häufiger gereinigt. Sinkt der Filterwiderstand p unter den Schwellwert pₛ, werden die Impulse in längeren Abständen Δt_{A2} abgegeben. Abhängig vom Verschmutzungsgrad des Filters wird einer von zwei voreingestellten Werten für die Zeitintervalle zwischen den Druckluftimpulsen ausgewählt. Die Zwangsreinigung im Falle eines Filterwiderstandes p < pₛ kann auch abgeschaltet werden.

Eine erste Variante des erfindungsgemäßen dynamischen Abreinigungsverfahrens ist in Fig. 1c dargestellt. Darin sind die Zeitdiagramme des Filterwiderstand p und des Abreinigungsdrucks p_{R} wiedergegeben. Der Verlauf des Abreinigungsdrucks p_{R} verdeutlicht, daß die Zeitabstände Δt_{A} der Druckluftimpulse mit steigendem Filterwiderstand p, d.h. steigender Verunreinigung, reduziert werden. Steigt der Filterwiderstand p über einen eingestellten Schwellwert pₛ, so erfolgt die Abreinigung mit den kürzest zulässigen Zeitintervallen Δt_{A.min} zwischen den Druckluftimpulsen. Bei sinkender Verunreinigung bzw. sinkendem Filterwiderstand p werden die Druckluftimpulse wieder seltener abgegeben, d.h. die Zeitintervalle Δt_{A} zwischen den Druckluftimpulsen verlängert. Gegebenenfalls kann die Abreinigung bei geringem Filterwiderstand p auch vollständig abgeschaltet werden, üblicherweise wird aber eine Zwangsreinigung mit sehr großen Zeitintervallen Δt_{A} zwischen den Druckluftimpulsen beibehalten. Im praktischen Einsatz betragen die Zeitintervalle Δt_{A} bei geringer bzw. nicht meßbarer Verunreinigungen des Filters (Filterwiderstand p << Schwellwert pₛ) 60 min und bei maximaler Verunreinigung (Filterwiderstand p = Schwellwert pₛ) 15 s.

Fig. 1d gibt eine zweite Variante des erfindungsgemäßen dynamischen Abreinigungsverfahrens wieder, wobei im Fall großer Verschmutzung, d.h. wenn der Filterwiderstand p über den Schwellwert pₛ steigt, die kürzesten Zeitintervalle Δt_{A. min} zwischen den Druckluftimpulsen auch bei wieder fallendem Filterwiderstand p so lange beibehalten werden, bis der Filterwiderstand p konstant bleibt oder wieder steigt. Dadurch wird erreicht, daß eine vollständige Reinigung des Filters auch bei starker Verschmutzung gesichert ist.

Fig. 1e zeigt schließlich die Zeitdiagramme des Filterwiderstand p und des Abreinigungsdrucks p_{R} für eine weitere Abreinigungsvariante bei Einstellung der Zeitintervalle Δt_{A} zwischen den Druckluftimpulsen mit automatischer Schwellwertanpassung. In diesem Fall wird der Schwellwert pₛ für den Filterwiderstand p bei Erreichen desselben automatisch um einen festgelegten einstellbaren Druckwert Δp erhöht. Dadurch wird erreicht, daß sich die Abreinigung selbstätig auf den optimalen Betriebszustand einstellt und somit verhindert wird, daß längere Zeit mit den kürzest zulässigen Zeitintervallen Δt_{A. min} zwischen den Druckluftimpulsen abgereinigt wird. Ebenso kann der Schwellwert pₛ für den Filterwiderstand p z.B. wenn der Filterwiderstand p über längere Zeit weit unter diesem Schwellwert pₛ liegt, um einen festgelegten einstellbaren Druckwert Δp erniedrigt werden und auch in diesem Fall eine optimale Anpassung an den jeweiligen Betriebszustand stattfinden.

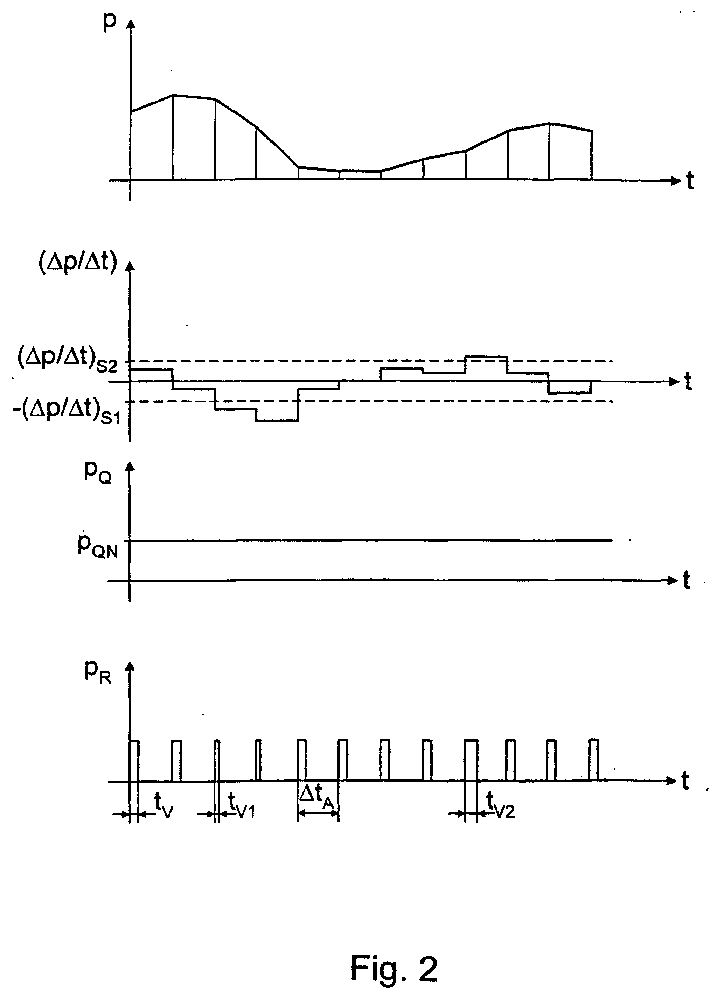

Die Verfahrensvariante gemäß Fig. 2 zeigt die Steuerung der Abreinigung von Filtern durch die Einstellung der Dauer t_{V} der Druckluftimpulse. Dargestellt sind der Filterwiderstand p als Indikator für die Verschmutzung des Filters, die zeitliche Änderung (Differenzenquotient) des Filterwiderstands (Δp/Δt), der Luftdruck im Druckspeicher p_{Q} und der Abreinigungsdruck p_{R} in Abhängigkeit der Zeit. In diesem und den folgenden Beispielen wird der Filterwiderstand in bestimmten Zeitintervallen gemessen. Die Pause zwischen den Messungen kann dabei entsprechend den Anforderungen und den Gegebenheiten festgelegt werden. Auch eine kontinuierliche Messung des Filterwiderstands ist möglich. Um die Wirkung der Abreinigungsimpulse in geeigneter Weise zu erfassen, wird unmittelbar nach dem Abreinigungsimpuls der Filterwiderstand p gemessen. Aus der Differenz des Filterwiderstands p vor und nach dem Abreinigungsimpuls kann der Abreinigungseffekt beurteilt werden und die Abreinigung dementsprechend optimiert werden. In dem dargestellten Verlaufsbeispiel zeigt der Filterwiderstand p bzw. der Differenzdruck im Filter anfänglich eine hohe Verschmutzung mit sinkender Tendenz. Die Änderung des Filterwiderstands (Δp/Δt) entspricht dem Abreinigungseffekt. Eine positive Änderung (Δp/Δt) entspricht einer Zunahme des Filterwiderstands p entsprechend einer Zunahme der Verschmutzung des Filters. Analog dazu entspricht eine negative Änderung (Δp/Δt) einer Abnahme des Filterwiderstands p entsprechend einer Abnahme der Verschmutzung des Filters. Sinkt die zeitliche Änderung des Filterwiderstands (Δp/Δt) unter einen willkürlich gewählten ersten Schwellwert -(Δp/Δt)_{S1}, wird die Dauer t_{V} der Druckluftimpulse auf einen bestimmten Wert t_{V1} reduziert. Steigt die zeitliche Änderung des Filterwiderstands (Δp/Δt) wieder über diesen ersten Schwellwert - (Δp/Δt)_{S1}, nimmt die Dauer der Druckluftimpulse wieder ihren ursprünglichen Wert t_{V} an. Allenfalls kann noch ein zweiter willkürlich gewählter Schwellwert für die zeitliche Änderung des Filterwiderstands (Δp/Δt)_{S2} vorgesehen sein, bei dessen Überschreitung die Dauer der Druckluftimpulse auf einen bestimmten Wert t_{V2} erhöht wird. Nach Unterschreiten dieses zweiten Schwellwerts (Δp/Δt)_{S2} nimmt die Dauer der Druckluftimpulse wieder den ursprünglichen Wert t_{V} an. Der Druck p_{R} der Druckluftimpulse und die Zeitintervalle Δt_{A} zwischen den Druckluftimpulsen sind in diesem Fall konstant. Maßgebend für den Abreinigungseffekt ist die Energie der Druckluftimpulse, welche durch die Fläche der Druckluftimpulse charakterisiert werden kann. Eine Vergrößerung der Fläche kann durch Vergrößerung der Amplitude bei gleichbleibender Dauer gemäß Fig. 1 oder durch Verlängerung der Dauer bei gleichbleibender Amplitude gemäß Fig. 2 erzielt werden.

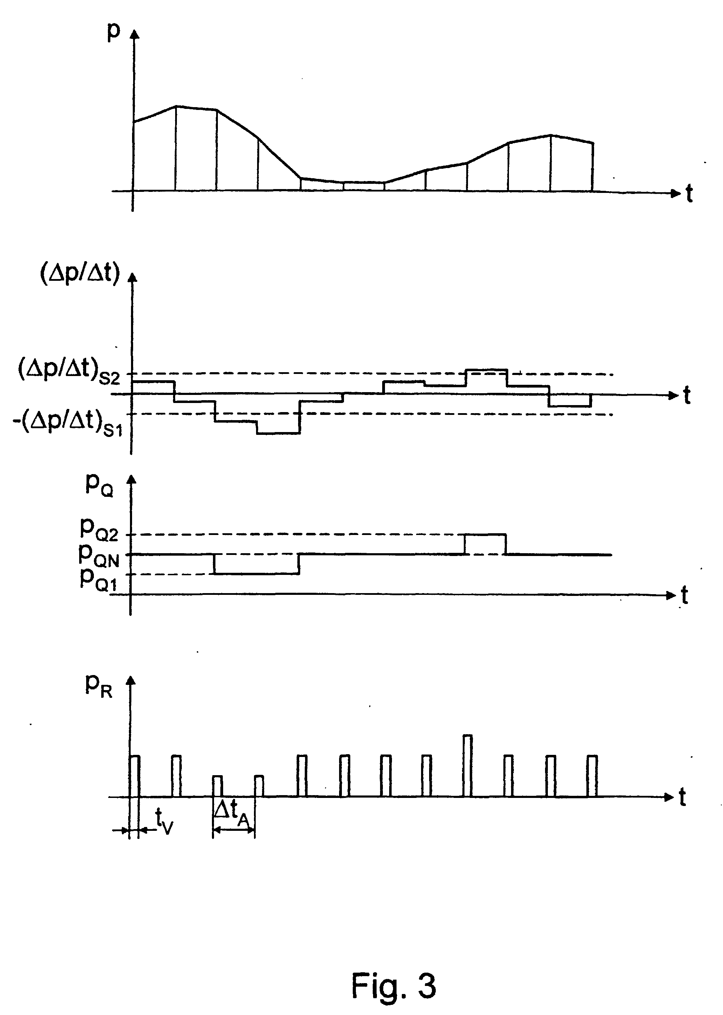

Die Verfahrensvariante gemäß Fig. 3, bei der die Abreinigung von Filtern durch automatische Einstellung des Drucks p_{R} der Druckluftimpulse in Abhängigkeit der Änderung des Filterwiderstands stattfindet, geht vom selben zeitlichen Verlauf des Filterwiderstands p wie in Fig. 2 aus. Sinkt die zeitliche Änderung des Filterwiderstands (Δp/Δt) unter einen willkürlich gewählten ersten Schwellwert -(Δp/Δt)_{S1} wird erfindungsgemäß der Druck im Druckspeicher p_{Q} von einem Normalwert p_{QN} auf einen Wert p_{Q1} reduziert. Da bei sinkender Änderung des Filterwiderstands (Δp/Δt) bzw. bei großem Abreinigungseffekt nicht mit dem normalen Druck p_{QN} abgereinigt werden muß, wird zur Schonung der Filter und zur Reduzierung des Energieaufwandes der Druck auf einen bestimmten Wert p_{Q1} reduziert. Sobald der Abfall des Filterwiderstands -(Δp/Δt) wieder über diesen ersten Schwellwert - (Δp/Δt)_{S1} steigt, wird der Druck im Druckspeicher wieder auf seinen normalen Wert p_{QN} eingestellt. Zusätzlich kann für Änderungen des Filterwiderstands (Δp/Δt) oberhalb eines willkürlich gewählten zweiten Schwellwerts (Δp/Δt)_{S2} der Druck im Druckspeicher p_{Q} auf einen bestimmten Wert p_{Q2} erhöht werden. Mit dieser Drucksteigerung wird einem schlechten Abreinigungseffekt bzw. einem Anstieg des Filterwiderstands entgegengewirkt. In dem gezeigten Beispiel erfolgt die Abreinigung mit konstanter Dauer t_{V} der Druckluftimpulse und mit konstanten Zeitintervallen Δt_{A} zwischen den Druckluftimpulsen. Die Zeichnung gibt nur eine Variante des erfindungsgemäßen Verfahrens wieder. Es ist natürlich auch eine kontinuierliche Regelung des Drucks im Druckspeicher p_{Q} möglich. Ebenso ist das Verfahren nicht darauf beschränkt, den Druck p_{Q} in Abhängigkeit eines oder mehrerer Schwellwerte für die zeitliche Änderung des Filterwiderstands (Δp/Δt) zu regeln. Es kann der Druck p_{Q} auch entsprechend einer Wertetabelle oder einer bestimmten Funktion des Filterwiderstands p bzw. der zeitlichen Änderung des Filterwiderstands (Δp/Δt) verändert werden.

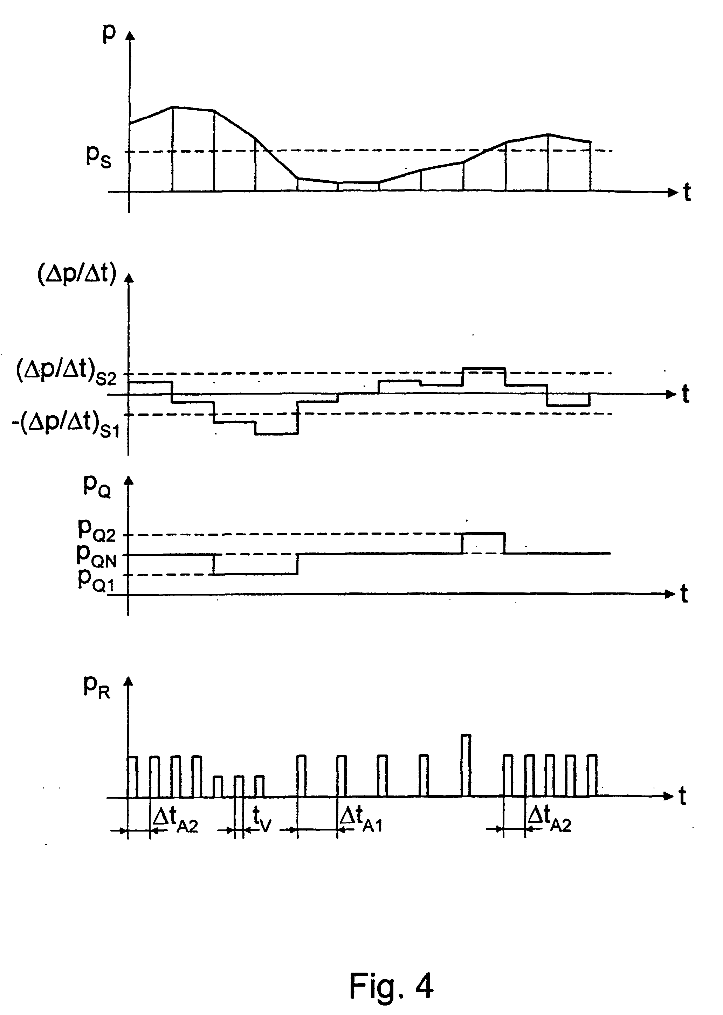

Natürlich können die Maßnahmen auch beliebig kombiniert und dadurch der technische Effekt, der durch das erfindungsgemäße Verfahren erzielt wird, vergrößert werden. Fig. 4 zeigt eine Verfahrensvariante mit Einstellung des Drucks p_{R} der Druckluftimpulse in Abhängigkeit der Änderung des Filterwiderstands (Δp/Δt) in Kombination mit der Einstellung der Zeitintervalle Δt_{A} zwischen den Druckluftimpulsen in Abhängigkeit des Filterwiderstands p. Unterhalb eines willkürlich gewählten Schwellwerts p_{S} für den Filterwiderstand erfolgt die Abreinigung in Intervallen Δt_{A1} und oberhalb des Schwellwerts p_{S} in kürzeren Intervallen Δt_{A2}. Dadurch wird bei einem höherem Filterwiderstand p entsprechend einem höheren Verschmutzungsgrad des Filters eine häufigere Abreinigung erzwungen, während unterhalb eines bestimmten Verschmutzungsgrads die Abreinigung in längeren Abständen erfolgt. Das in dieser Abbildung dargestellte Beispiel zeigt nur eine einfache Methode der Regelung der Intervalle zwischen den Abreinigungsimpulsen Δt_{A} in Abhängigkeit des Filterwiderstands p. Die Zeit Δt_{A} kann auch entsprechend einer Wertetabelle für die Filterwiderstände oder entsprechend einer bestimmten Funktion des Filterwiderstands p bzw. der zeitlichen Änderung des Filterwiderstands (Δp/Δt) eingestellt werden und auf verschiedenste Art eine optimale Anpassung der Abreinigung an den tatsächlichen Verschmutzungsgrad des Filters realisiert werden.

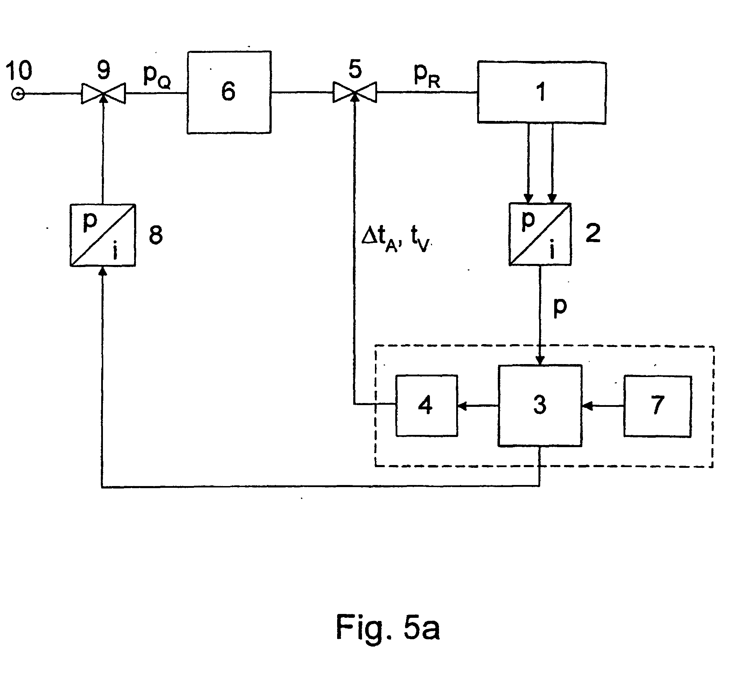

In Fig. 5a ist schematisch ein Blockschaltbild einer Ausführungsform einer Einrichtung zur Ausführung des erfindungsgemäßen Verfahrens dargestellt. Mit Hilfe eines Differenzdruckmeßumformers 2 wird der am Filter 1 gemessene Differenzdruck (Filterwiderstand) p in einen elektrischen Strom umgewandelt und einem Mikrokontroller 3 zugeführt. An weiteren Eingängen des Mikrokontrollers 3 können periphere Einrichtungen 7, wie z.B. Schalter od. dgl. zur Festlegung von Programmparametern angeschlossen sein. An den Ausgängen des Mikrokontrollers 3 ist ein Druckwandler 8 und allenfalls ein Impulsformer 4 angeschlossen. Der Druckwandler 8 wandelt das vom Mikrokontroller herrührende elektrische Signal in einen entsprechenden Druck um, mit dem ein Proportionalventil 9 geregelt wird. Dadurch wird der Luftdruck der Druckluftquelle 10 mit dem gewünschten Druck p_{Q} einem Druckspeicher 6 zugeführt. Der Impulsformer 4 öffnet das Magnetventil 5 zu den vom Mikrokontroller 3 berechneten oder fest eingestellten Zeitpunkten Δt_{A} wodurch Abreinigungsimpulse p_{R} in das Filter gelangen. Im Mikrokontroller 3 läuft ein Programm ab, das die Eingänge des Mikrokontrollers 3 periodisch abfragt und entsprechend dem Signals des Differenzdruckumformers 2 einen Wert berechnet, der dem Druck p_{R} der Druckluftimpulse proportional ist. An den Ausgang des Mikrokontrollers 3, der mit dem Druckwandler 8 verbunden ist, wird ein entsprechendes elektrisches Signal zur Steuerung des Proportionalventils 9 gelegt. Allenfalls berechnet das Programm des Mikrokontrollers 3 entsprechend dem Wert des Signals des Differenzdruckumformers 2 einen Zeitwert Δt_{A}, in dessen Abständen ein elektrisches Signal an den Impulsformer 4 zur Öffnung des Magnetventils 5 gelegt wird. Darüberhinaus kann das Programm des Mikrokontrollers 3 auch einen Wert berechnen, welcher der Dauer t_{V} der Druckluftimpulse proportional ist. Auch dieser wird an den Ausgang des Mikrokontrollers 3, der mit dem Impulsformer 4 verbunden ist, gelegt und steuert somit die Öffnungszeit des Magnetventils 5. In dem dargestellten Blockschaltbild ist jeweils nur ein Impulsformer 4, Magnetventil 5, Druckumformer 8 sowie Proportionalventil 9 dargestellt. Es können auch mehrere solche Einrichtungen, z.B. entsprechend der Anzahl der Filter 1 oder Filterelemente vorhanden sein.

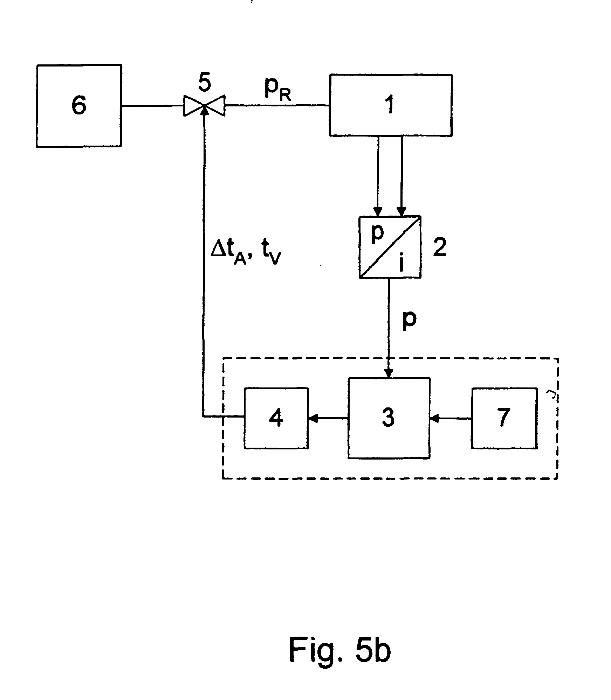

Fig. 5b zeigt das Blockschaltbild einer gegenüber Fig. 5a vereinfachten Ausführungsform einer Einrichtung zur Ausführung des erfindungsgemäßen Verfahrens zur Steuerung lediglich der Zeitparameter der Druckluftimpulse. Dementsprechend können gegenüber Fig. 5a der Druckwandler 8 und das Proportionalventil 9 sowie die entsprechenden Verbindungen entfallen. Die Regelung der Abreinigung des Filters 1 erfolgt dabei nur durch Veränderung der zeitlichen Parameter Δt_{A} und t_{V} der Druckluftimpulse. Der Druck der Druckluftimpulse p_{R} ist konstant. Diese vereinfachte Einrichtungsvariante kann z.B. für Betriebe, bei der nur konstanter Druck verfügbar ist, eingesetzt werden.

Obwohl sich elektronische Schaltungen für die Realisierung des erfindungsgemäßen Verfahrens am besten eignen, sind auch andere Konstruktionen zur Ausführung des erfindungsgemäßen Verfahrens denkbar.

## Patentansprüche

1. Verfahren zur Steuerung der Abreinigung von Filtern für die Feststoffabscheidung mit in bestimmten Zeitintervallen Δt_{A} wiederkehrenden Druckluftimpulsen bestimmten Drucks p_{R} und bestimmter Dauer t_{V} in Abhängigkeit des gemessenen Filterwiderstands p, **dadurch gekennzeichnet, dass** die Zeitintervalle Δt_{A} zwischen den Druckluftimpulsen in Abhängigkeit der zeitlichen Änderung des aktuellen Filterwiderstands (Δp/Δt) automatisch eingestellt werden.

2. Verfahren nach Anspruch 1, **dadurch gekennzeichnet, dass** die Zeitintervalle Δt_{A} zwischen den Druckluftimpulsen für Filterwiderstände p unterhalb eines willkürlich gewählten Schwellwerts pₛ mit steigendem Filterwiderstand p verkürzt werden und mit fallendem Filterwiderstand p verlängert werden und dass für Filterwiderstände p oberhalb des Schwellwerts pₛ die Abreinigung mit den kürzest zulässigen Zeitintervallen Δt_{Amin} zwischen den Druckluftimpulsen stattfindet.

3. Verfahren nach Anspruch 2, **dadurch gekennzeichnet, dass** die kürzest zulässigen Zeitintervalle Δt_{Amin} zwischen den Druckluftimpulsen, nachdem der Filterwiderstand p über den Schwellwert pₛ steigt, auch bei fallendem Filterwiderstand p solange beibehalten werden, bis der Filterwiderstand p konstant bleibt oder wieder steigt.

4. Verfahren nach einem der Ansprüche 1 bis 3, **dadurch gekennzeichnet, dass** die Zeitintervalle Δt_{A} zwischen den Drucklüftimpulsen für zeitliche Änderungen des Filterwiderstands (Δp/Δt) unterhalb eines willkürlich gewählten ersten Schnell-Schwellwerts -(Δp/Δt)_{S1} reduziert werden und für zeitliche Änderungen des Filterwiderstands (Δp/Δt) oberhalb dieses ersten Schwellwerts -(Δp/Δt)_{S1} wieder den ursprünglichen Wert annehmen und dass die Zeitintervalle Δt_{A} zwischen den Druckluftimpulsen allenfalls für zeitliche Änderungen des Filterwiderstands (Δp/Δt) oberhalb eines willkürlich gewählten zweiten Schwellwerts (Δp/Δt)_{S2} erhöht werden und für zeitliche Änderungen des Filterwiderstands (Δp/Δt) unterhalb dieses zweiten Schwellwerts (Δp/Δt)_{S2} wieder den ursprünglichen Wert annehmen.

5. Verfahren zur Steuerung der Abreinigung von Filtern für wie Feststoffabscheidung mit in bestimmten Zeitintervallen Δt_{A} wiederkehrenden Druckluftimpulsen bestimmten Drucks p_{R} und bestimmter Dauer t_{V} in Abhängigkeit des gemessenen Filterwiderstands p, **dadurch gekennzeichnet, dass** die Dauer t_{V} der Druckluftimpulse in Abhängigkeit der zeitlichen Änderung des aktuellen Filterwiderstands (Δp/Δt) automatisch eingestellt wird.

6. Verfahren nach Anspruch 5, **dadurch gekennzeichnet, dass** die Dauer tV der Druckluftimpulse für Filterwiderstände p unterhalb eines willkürlich gewählten Schwellwerts pₛ mit steigendem Filterwiderstand p erhöht wird und mit fallendem Filterwiderstand p verringert wird und dass für Filterwiderstände p oberhalb des Schwellwerts pₛ die Abreinigung mit Druckluftimpulsen maximaler Dauer t_{Vmax} stattfindet.

7. Verfahren nach Anspruch 6, **dadurch gekennzeichnet, dass** die Abreinigung mit Druckluftimpulsen maximaler Dauer t_{Vmax}, nachdem der Filterwiderstand p über den Schwellwert pₛ steigt, auch bei fallendem Filterwiderstand p solange beibehalten wird, bis der Filterwiderstand p konstant bleibt oder wieder steigt.

8. Verfahren nach einem der Ansprüche 5 bits 7, **dadurch gekennzeichnet, dass** die Dauer t_{V} der Druckluftimpulse für zeitliche Änderungen des Filterwiderstands (Δp/Δt) unterhalb eines willkürlich gewählten ersten Schwellwerts -(Δp/Δt)_{S1} reduziert wird und für zeitliche Änderungen des Filterwiderstands (Δp/Δt) oberhalb dieses ersten Schwellwerts - (Δp/Δt) _{S1} wieder den ursprünglichen Wert annimmt und dass die Dauer t_{V} der Druckluftimpulse allenfalls für zeitliche Änderungen des Filterwiderstands (Δp/Δt) oberhalb eines willkürlich gewählten zweiten Schwellwerts (Δp/Δt)_{S2} erhöht wird und für zeitliche Änderungen des Filterwiderstands (Δp/Δt) unterhalb dieses zweiten Schwellwerts (Δp/Δt)_{S2} wieder den ursprünglichen Wert annimmt.

9. Verfahren zur Steuerung der Abreinigung von Filtern für die Feststoffabscheidung mit in bestimmten Zeitintervallen Δt_{A} wiederkehrenden Druckluftimpulsen bestimmten Drucks p_{R} und bestimmter Dauer t_{V} in Abhängigkeit des gemessenen Filterwiderstands p, **dadurch gekennzeichnet, dass** der Druck p_{R} der Druckluftimpulse in Abhängigkeit der zeitlichen Änderung des aktuellen Filterwiderstands (Δp/Δt) automatisch eingestellt wird.

10. Verfahren nach Anspruch 9, **dadurch gekennzeichnet, dass** der Druck p_{R} der Druckluftimpulse für Filterwiderstände p unterhalb eines willkürlich gewählten Schwellwerts pₛ mit steigendem Filterwiderstand p erhöht wird und mit fallendem Filterwiderstand p verringert wird und dass für Filterwiderstände p oberhalb des Schwellwerts pₛ die Abreinigung mit maximal zulässigem Druck p_{Rmax} stattfindet.

11. Verfahren nach Anspruch 10, **dadurch gekennzeichnet, dass** die Abreinigung mit maximalem Druck p_{Rmax}, nachdem der Filterwiderstand p über den Schwellwert pₛ steigt, auch bei fallendem Filterwiderstand p solange beibehalten wird, bis der Filterwiderstand p konstant bleibt oder wieder steigt.

12. Verfahren nach einem der Ansprüche 9 bis 11, **dadurch gekennzeichnet, dass** der Druck p_{R} der Druckluftimpulse für zeitliche Änderungen des Filterwiderstands (Δp/Δt) unterhalb eines willkürlich gewählten ersten Schwellwerts -(Δp/Δt)_{S1} reduziert wird und für zeitliche Änderungen des Filterwiderstands (Δp/Δt) oberhalb dieses ersten Schwellwerts -(Δp/Δt)_{S1} wieder den ursprünglichen Wert annimmt und dass der Druck p_{R} der Druckluftimpulse allenfalls für zeitliche Änderungen des Filterwiderstands (Δp/Δt) oberhalb eines willkürlich gewählten zweiten Schwellwerts (Δp/Δt)_{S2} erhöht wird und für zeitliche Änderungen des Filterwiderstands (Δp/Δt) unterhalb dieses zweiten Schwellwerts (Δp/Δt)_{S2} wieder den ursprünglichen Wert annimmt.

13. Verfahren zur Steuerung der Abreinigung von Filtern für die Feststoffabscheidung mit in zeitintervallen Δt_{A} wiederkehrenden Druckluftimpulsen der Dauer t_{V} in Abhängigkeit des gemessenen Filterwiderstands p, **gekennzeichnet durch** die Kombination mindestens zweier Maßnahmen der Ansprüche 1 bis 12.

14. Verfahren nach Ansprüche 2, 3, 6, 7, 10, 11, **dadurch gekennzeichnet, dass** der willkürlich gewählte Schwellwert des Filterwiderstands pₛ automatisch um einen festgelegten einstellbaren Druckwert Δp erhöht oder reduziert wird.

15. Verfahren nach Ansprüche 4, 8, 12, **dadurch gekennzeichnet, dass** der erste willkürliche Schwellwert für die Änderung des Filterwiderstands -(Δp/Δt)_{S1} und allenfalls der zweite willkürlich gewählte Schwellwert für die Änderung des Filterwiderstands (Δp/Δt)_{S2} automatisch um einen festgelegten einstellbaren Wert Δ(Δp/Δt) erhöht oder reduziert wird.

16. Einrichtung zur Ausführung des Verfahrens nach Ansprüchen 1 bis 15 umfassend einen Mikrokontroller (3) mit Eingängen und Ausgängen, einen Differenzdruckumformer (2), zumindest einen Impulsformer (4), zumindest ein Magnetventil (5), einen Druckspeicher (6), allenfalls zumindest einen Druckwandler (8); und allenfalls zumindest ein Proportionalventil (9), **dadurch gekennzeichnet, dass** der Ausgang des Differenzdruckumformers (2) mit einem Eingang des Mikrokontrollers (3), ein Ausgang des Mikrokontrollers (3) mit dem oder jedem allfälligen Druckwandler (8), ein Ausgang des Mikrokontrollers (3) mit dem oder jedem Impulsformer (4) sowie der oder jeder Druckwandler (8) mit je einem Proportionalventil (9) und der oder jeder Impulsformer (4) mit je einem Magnetventil (5) verbunden ist und dass im Mikrokontroller (3) ein Programm abläuft, das entsprechendder zeitlichen Änderung des Signals des Differenzdruckumformers (2) einen Zeitwert berechnet, in dessen Abständen Δt_{A} ein elektrisches Signal an den oder jeden Impulsformer (4) zur Öffnung des oder jedes Magnetventils (5) gelegt wird, und bzw. oder welches Programm einen der Dauer des elektrischen Signals an den oder jeden Impulsformer (4) und damit der Öffnungsdauer tv des oder jedes Magnetventils (5) entsprechenden Zeitwert berechnet, und welches Programm allenfalls eine Wert berechnet und ein entsprechendes elektrisches Signal an den oder jeden Druckwandler (8) zur Steuerung des oder jedes Proportionalventils (9) legt.

17. Einrichtung nach Anspruch 16, **dadurch gekennzeichnet, dass** mit den Eingängen des Mikroprozessors (3) periphere Einrichtungen (7), wie zum Beispiel Schalter od. dgl. zur Festlegung und Änderung von Programmparametern des Mikrokontrollers (3) verbunden sind.

## Claims

1. A method for controlling the cleaning of filters for the separation of solid particles with compressed-air pulses of a certain pressure p_{R}, recurring at certain time intervals Δt_{A}, and of a certain duration t_{V}, as a function of the filter resistance p measured, **characterised in that** the time intervals Δt_{A} between the compressed-air pulses are automatically adjusted as a function of the temporal change of the actual filter resistance (Δp/Δt).

2. A method according to claim 1, **characterised in that** the time intervals Δt_{A} between the compressed-air pulses for filter resistances p below a randomly chosen threshold value pₛ are shortened with increasing filter resistance p, and lengthened with decreasing filter resistance p, and that for filter resistances p above the threshold value pₛ, cleaning is effected with the shortest allowable time intervals Δt_{Amin} between the compressed-air pulses.

3. A method according to claim 2, **characterised in that** after the filter resistance p has increased to above the threshold value pₛ, the shortest allowable time intervals Δt_{Amin} between the compressed-air pulses are maintained also with a decreasing filter resistance p until the filter resistance p remains constant or increases again.

4. A method according to any one of claims 1 to 3, **characterised in that** the time intervals Δt_{A} between the compressed-air pulses are reduced for temporal changes of the filter resistance (Δp/Δt) below a randomly chosen first threshold value (Δp/Δt)_{S1}, and for temporal changes of the filter resistance (Δp/Δt) above this first threshold value (Δp/Δt)_{S1} resume their original value, and that the time intervals Δt_{A} between the compressed-air pulses optionally are increased for temporal changes of the filter resistance (Δp/Δt) above a randomly chosen second threshold value (Δp/Δt)_{S2}, and for temporal changes of the filter resistance (Δp/Δt) below this second threshold value (Δp/Δt)_{S2} resume their original value.

5. A method for controlling the cleaning of filters for the separation of solid particles with compressed-air pulses of a certain pressure p_{R}, recurring at certain time intervals Δt_{A}, and of a certain duration t_{V}, as a function of the filter resistance p measured, **characterised in that** the duration t_{V} of the compressed-air pulses is automatically adjusted as a function of the temporal change of the actual filter resistance (Δp/Δt).

6. A method according to claim 5, **characterised in that** the duration t_{V} of the compressed-air pulses for filter resistances p below a randomly chosen threshold value p_{S} is increased with increasing filter resistance p, and shortened with a decreasing filter resistance p, and that for filter resistances p above the threshold value p_{S}, cleaning is effected with compressed-air pulses of the maximum duration t_{Vmax}.

7. A method according to claim 6, **characterised in that** after the filter resistance p has increased to above the threshold value p_{S}, cleaning with compressed-air pulses of the maximum duration t_{Vmax} is maintained also at falling filter resistance p until the filter resistance p remains constant or increases again.

8. A method according to any one of claims 5 to 7, **characterised in that** the duration t_{V} of the compressed-air pulses is reduced for temporal changes of the filter resistance (Δp/Δt) below a randomly chosen first threshold value (Δp/Δt) _{S1}, and for temporal changes of the filter resistance (Δp/Δt) above this first threshold value (Δp/Δt) _{S1} resumes its original value, and that the duration t_{V} of the compressed-air pulses optionally is increased for temporal changes of the filter resistance (Δp/Δt) above a randomly chosen second threshold value (Δp/Δt)_{S2}, and for temporal changes of the filter resistance (Δp/Δt) below this second threshold value (Δp/Δt)_{S2} resumes its original value.

9. A method for controlling the cleaning of filters for the separation of solid particles with compressed-air pulses of a certain pressure p_{R}, recurring at certain time intervals Δt_{A}, and of a certain duration t_{V}, as a function of the filter resistance p measured, **characterised in that** the pressure p_{R} of the compressed-air pulses is automatically adjusted as a function of the temporal change of the actual filter resistance (Δp/Δt).

10. A method according to claim 9, **characterised in that** the pressure p_{R} of the compressed-air pulses for filter resistances p below a randomly chosen threshold value p_{S} is increased with an increasing filter resistance p, and reduced with a decreasing filter resistance p, and that for filter resistances p above the threshold value p_{S}, cleaning is effected with the maximum allowable pressure p_{Rmax}.

11. A method according to claim 10, **characterised in that** after the filter resistance p has increased to above the threshold value p_{S}, cleaning with the maximum pressure p_{Rmax} is maintained also at falling filter resistance p until the filter resistance p remains constant or increases again.

12. A method according to any one of claims 9 to 11, **characterised in that** the pressure p_{R} of the compressed-air pulses is reduced for temporal changes of the filter resistance (Δp/Δt) below a randomly chosen first threshold value (Δp/Δt)_{S1}, and for temporal changes of the filter resistance (Δp/Δt) above this first threshold value (Δp/Δt) _{S1} resumes its original value, and that the pressure p_{R} of the compressed-air pulses optionally is increased for temporal changes of the filter resistance (Δp/Δt) above a randomly chosen second threshold value (Δp/Δt) _{S2}, and for temporal changes of the filter resistance (Δp/Δt) below this second threshold value (Δp/Δt)_{S2} resumes its original value.

13. A method for controlling the cleaning of filters for the separation of solid particles with compressed-air pulses recurring at time intervals Δt_{A} and of a duration t_{V}, as a function of the filter resistance p measured, **characterised by** the combination of at least two measures of claims 1 to 12.

14. A method according to claims 2, 3, 6, 7, 10, 11, **characterised in that** the randomly chosen threshold value of the filter resistance p_{S} is automatically increased or reduced by a certain adjustable pressure value Δp.

15. A method according to claim 4, 8, 12, **characterised in that** the first random threshold value for changing the filter resistance, (Δp/Δt)_{S1}, and, optionally, the second randomly chosen threshold value for changing the filter resistance, (Δp/Δt)_{S2}, is automatically increased or reduced by a certain adjustable value Δ(Δp/Δt).

16. An arrangement for carrying out the method according to claims 1 to 15, comprising a micro-controller (3) with inputs and outputs, a difference pressure transducer (2), at least one pulse shaper (4), at least one solenoid valve (5), a pressure storage means (6), optionally at least one pressure transducer (8), and optionally at least one proportional valve (9), **characterised in that** the output of the difference pressure transducer (2) is connected to an input of the micro-controller (3), an output of the micro-controller (3) is connected to the or each possibly present pressure transducer (8), an output of the micro-controller (3) is connected to the or each pulse shaper (4), as well as the or each pressure transducer (8) is connected to the or each proportional valve (9), and the or each puls shaper (4) is connected to one solenoid valve (5) each, and that a program proceeds in the micro-controller (3) which, according to the temporal change of the signal of the difference pressure transducer (2), computes a time value in the intervals Δt_{A} of which an electric signal is applied to the or each pulse shaper (4) for opening the or each solenoid valve (5), and/or which program computes a time value corresponding to the duration of the electric signal to the or each pulse shaper (4) and thus, to the duration of opening t_{V} of the or each solenoid valve (5), and which program optionally computes a value and applies a corresponding electrical signal to the or each pressure transducer (8) for controlling the or each proportional valve (9).

17. An arrangement according to claim 16, **characterised in that** peripheral devices (7), such as, e.g., switches or the like, are connected to the inputs of the micro-controller (3) for determining and changing program parameters of the micro-controller (3).

## Revendications

1. Procédé pour commander le nettoyage de filtres pour la séparation des matières solides avec des impulsions d'air comprimé, d'une pression définie p_{R} et d'une durée définie t_{V} en fonction de la résistance de filtre mesurée p, se répétant à des intervalles de temps Δt_{A} définis, **caractérisé en ce que** les intervalles de temps Δt_{A} entre les impulsions d'air comprimé sont réglées automatiquement en fonction de la modification temporelle de la résistance de filtre actuelle ou instantanée (Δp/Δt).

2. Procédé selon la revendication 1, **caractérisé en ce que** les intervalles de temps Δt_{A} entre les impulsions d'air comprimé sont réduites pour des résistances de filtre p en dessous d'une valeur seuil p_{S} sélectionnée volontairement avec une résistance de filtre p croissante, et sont rallongées avec une résistance de filtre p décroissante, et **en ce que** le nettoyage est réalisé avec les plus petits intervalles de temps Δt_{Amin} admissibles entre les impulsions d'air comprimé pour des résistances de filtre p au-dessus de la valeur seuil p_{S}.

3. Procédé selon la revendication 2, **caractérisé en ce que** les plus petits intervalles de temps Δt_{Amin} admissibles entre les impulsions d'air comprimé, après que la résistance de filtre p monte au-dessus de la valeur seuil p_{S}, sont maintenues même lorsque la résistance de filtre p décroît, jusqu'à ce que la résistance de filtre p reste constante ou augmente de nouveau.

4. Procédé selon l'une des revendications 1 à 3, **caractérisé en ce que** les intervalles de temps Δt_{A} entre les impulsions d'air comprimé sont réduits pour des modifications temporelles de la résistance de filtre (Δp/Δt) en dessous d'une première valeur seuil -(Δp/Δt)_{S1} sélectionnée volontairement, et adoptent de nouveau la valeur d'origine pour des modifications temporelles de la résistance de filtre ((Δp/Δt) au-dessus de cette première valeur seuil -(Δp/Δt)_{S1}, et **en ce que** les intervalles de temps Δt_{A} entre les impulsions d'air comprimé sont éventuellement augmentés pour des modifications temporelles de la résistance de filtre (Δp/Δt) au-dessus d'une seconde valeur seuil (Δp/Δt)_{S2} sélectionnée volontairement, et adoptent de nouveau la valeur d'origine pour des modifications temporelles de la résistance de filtre (Δp/Δt) en dessous de cette seconde valeur seuil (Δp/Δt)_{S2}.

5. Procédé pour commander le nettoyage de filtres pour la séparation des matières solides avec des impulsions d'air comprimé d'une pression définie p_{R} et d'une durée définie t_{V} en fonction de la résistance de filtre mesurée p, se répétant à des intervalles de temps Δt_{A} définis, **caractérisé en ce que** la durée t_{V} des impulsions d'air comprimé est réglée automatiquement en fonction de la modification temporelle de la résistance de filtre actuelle ou instantanée (Δp/Δt).

6. Procédé selon la revendication 5, **caractérisé en ce que** la durée t_{V} des impulsions d'air comprimé est augmentée pour les résistances de filtre p en dessous d'une valeur seuil Ps sélectionnée volontairement avec une résistance de filtre p croissante, et est diminuée avec une résistance de filtre p décroissante, et **en ce que** le nettoyage est réalisé, pour des résistances de filtre p au-dessus de la valeur seuil p_{S}, avec des impulsions d'air comprimé d'une durée maximale t_{Vmax}.

7. Procédé selon la revendication 6, **caractérisé en ce que** le nettoyage avec des impulsions d'air comprimé d'une durée maximale t_{Vmax}. après que la résistance de filtre p est montée au-dessus de la valeur seuil p_{S}, est maintenu aussi en cas de résistance de filtre décroissante, tant que la résistance de filtre p reste constante ou augmente de nouveau.

8. Procédé selon l'une quelconque des revendications 5 à 7, **caractérisé en ce que** la durée t_{V} des impulsions d'air comprimé est réduite pour des modifications temporelles de la résistance de filtre (Δp/Δt) en dessous d'une première valeur seuil - (Δp/Δt)_{S1} sélectionnée volontairement, et adopte de nouveau la valeur d'origine pour des modifications temporelles de la résistance de filtre ((Δp/Δt) au-dessus de cette première valeur seuil -(Δp/Δt)_{S1}, et **en ce que** la durée t_{V} des impulsions d'air comprimé est éventuellement augmentée pour des modifications temporelles de la résistance de filtre (Δp/Δt) au-dessus d'une seconde valeur seuil ((Δp/Δt)_{S2} sélectionnée volontairement, et adopte de nouveau la valeur d'origine pour des modifications temporelles de la résistance de filtre ((Δp/Δt) en dessous de cette seconde valeur seuil (Δp/Δt)_{S2}.

9. Procédé pour commander le nettoyage de filtres pour la séparation des matières solides avec des impulsions d'air comprimé d'une pression définie p_{R} et d'une durée définie t_{V} en fonction de la résistance de filtre mesurée p, se répétant à des intervalles de temps Δt_{A} définis, **caractérisé en ce que** la pression p_{R} des impulsions d'air comprimé est réglée automatiquement en fonction de la modification temporelle de la résistance actuelle ou instantanée du filtre (Δp/Δt).

10. Procédé selon la revendication 9, **caractérisé en ce que** la pression p_{R} des impulsions d'air comprimé est augmentée pour des résistances de filtre p en dessous d'une valeur seuil p_{S} sélectionnée volontairement avec une résistance de filtre p croissante, et est diminuée avec une résistance de filtre p décroissante, et **en ce que** le nettoyage est réalisé avec la pression p_{Rmax} maximum admissible pour des résistances de filtre p au-dessus de la valeur seuil p_{S}.

11. Procédé selon la revendication 10, **caractérisé en ce que** le nettoyage avec une pression maximale p_{Rmax}, une fois que la résistance de filtre p est montée au-dessus de la valeur seuil p_{S}, est maintenu également en cas de résistance de filtre p descendante jusqu'à ce que la résistance de filtre p reste constante ou augmente de nouveau.

12. Procédé selon l'une quelconque des revendications 9 à 11, **caractérisé en ce que** la pression p_{R} des impulsions d'air comprimé est réduite pour des modifications temporelles de la résistance de filtre (Δp/Δt) en dessous d'une première valeur seuil -(Δp/Δt)_{S1} sélectionnée volontairement, et adopte de nouveau la valeur d'origine pour des modifications temporelles de la résistance de filtre ((Δp/Δt) au-dessus de cette première valeur seuil -(Δp/Δt)_{S1}, et **en ce que** la pression p_{R} des impulsions d'air comprimé est éventuellement augmentée pour des modifications temporelles de la résistance de filtre (Δp/Δt) au-dessus d'une seconde valeur seuil (Δp/Δt)_{S2} sélectionnée volontairement, et adopte de nouveau la valeur d'origine pour des modifications temporelles de la résistance de filtre (Δp/Δt) en dessous de cette seconde valeur seuil (Δp/Δt)_{S2}.

13. Procédé pour commander le nettoyage de filtres pour la séparation des matières solides avec des impulsions d'air comprimé se répétant à des intervalles de temps Δt_{A} et d'une durée définie t_{V} en fonction de la résistance de filtre mesurée p, **caractérisé par** la combinaison d'au moins deux des mesures des revendications 1 à 12.

14. Procédé selon l'une quelconque des revendications 2, 3, 6, 7, 10, 11, **caractérisé en ce que** la valeur seuil sélectionnée volontairement de la résistance de filtre p_{S} est automatiquement augmentée ou réduite d'une valeur de pression réglable définie Δₚ.

15. Procédé selon l'une quelconque des revendications 4, 8, 12, **caractérisé en ce que** la première valeur seuil volontaire est automatiquement augmentée ou réduite d'une valeur réglable définie Δ (Δp/Δt) pour la modification de la résistance de filtre -(Δp/Δt)_{S1} et la seconde valeur seuil volontaire est éventuellement automatiquement augmentée ou réduite d'une valeur réglable définie Δ (Δp/Δt) pour la modification de la résistance de filtre (Δp/Δt)_{S2}.

16. Dispositif pour réaliser le procédé selon les revendications 1 à 15, comprenant un microcontrôleur (3) avec des entrées et des sorties, un convertisseur de pression différentielle (2), au moins un formateur d'impulsions (4), au moins une électrovalve (5), un accumulateur de pression (6), éventuellement au moins un transformateur de pression (8), et éventuellement au moins une valve proportionnelle (9), **caractérisé en ce que** la sortie du convertisseur de pression différentielle (2) est raccordé à une entrée du microcontrôleur (3), une sortie du microcontrôleur (3) est raccordée avec le ou chaque transformateur de pression éventuel (8), une sortie du microcontrôleur (3) avec le ou chaque formateur d'impulsions (4), ainsi que le ou chaque transformateur de pression (8) est raccordé à une valve proportionnelle (9) et le ou chaque formateur d'impulsions (4) est raccordé à une électrovalve (5), et **en ce qu'**un programme se déroule dans le microcontrôleur (3), lequel programme calcule, en fonction de la modification temporelle du signal du convertisseur de pression différentielle (2), une valeur temporelle, dans les intervalles de temps Δt_{A} de laquelle on introduit un signal électrique sur le ou chaque formateur d'impulsions (4) pour ouvrir la ou chaque /électrovalve (5), et respectivement ou bien, lequel programme calcule l'une des durées du signal électrique sur le ou chaque formateur d'impulsions (4) et donc une valeur temporelle correspondant à la durée d'ouverture t_{V} de la ou de chaque électrovalve (5), et lequel programme calcule éventuellement une valeur et introduit un signal électrique correspondant sur le ou chaque transformateur de pression (8) pour commander la ou chaque valve proportionnelle (9).

17. Dispositif selon la revendication 16, **caractérisé en ce que** des organes périphériques (7), tels que par exemple des commutateurs ou similaires, sont raccordés aux entrées du microprocesseur (3) afin de déterminer et de modifier des paramètres de programme du microcontrôleur (3).
